# EUROPÄISCHE PATENTSCHRIFT

(11) **EP 0 946 757 B1**
(45) Veröffentlichungstag und Bekanntmachung des Hinweises auf die Patenterteilung: **11.12.2002**
(21) Anmeldenummer: 97911178.8
(22) Anmeldetag: 06.10.1997
(51) Int. Cl.: C21B 13/00

(54) **VERFAHREN ZUM EINBLASEN VON METALLOXIDHÄLTIGEN FEINTEILCHEN IN EIN REDUKTIONSGAS**
METHOD FOR BLOWING FINE PARTICLES CONTAINING METAL OXIDE INTO A REDUCING GAS
PROCEDE POUR L'INJECTION DE FINES RENFERMANT DES OXYDES METALLIQUES DANS UN GAZ DE REDUCTION

(30) Priorität: 08.10.1996 AT 178096
(43) Veröffentlichungstag der Anmeldung: 06.10.1999
(73) Patentinhaber: VOEST-ALPINE INDUSTRIEANLAGENBAU GMBH, 4020 Linz (AT); POHANG IRON & STEEL CO., LTD., Pohang City, Kyong Sang Book-Do 790-785 (KR); RESEARCH INSTITUTE OF INDUSTRIAL SCIENCE & TECHNOLOGY, INCORPORATED FOUNDATION, Pohang City, Kyong Sang Book-do 790-330 (KR)
(72) Erfinder: RINNER, Bernhard, deceased (AT); KEPPLINGER, Leopold, Werner, A-4060 Leonding (AT); NAGL, Michael, A-4204 Reichenau (AT); HAUZENBERGER, Franz, A-4030 Linz (AT); WALLNER, Felix, A-4020 Linz (AT); BRANDL, Peter, A-4020 Linz (AT); GENNARI, Udo, A-4020 Linz (AT); SCHENK, Johannes, A-4040 Linz (AT)
(74) Vertreter: VA TECH Patente GmbH & Co
(86) Internationale Anmeldenummer: EP9705468
(87) Internationale Veröffentlichungsnummer: WO98015660

(56) Entgegenhaltungen:
- WO-A-90/15162
- DE-C- 470 622
- GB-A- 827 957
- US-A- 4 490 170
- PATENT ABSTRACTS OF JAPAN vol. 010, no. 062 (M-460), 12.März 1986 & JP 60 209430 A (BABCOCK HITACHI KK), 22.Oktober 1985,

## Beschreibung

Die Erfindung betrifft ein Verfahren zum Einblasen von metalloxidhältigen Feinteilchen in ein Reduktionsgas, sowie eine Einrichtung zur Durchführung des Verfahrens.

Es ist bekannt (JP-A-63241125), in eine Reduktionsgasleitung feine Erzpartikel einzubringen und eine Reduktion der Erzpartikel während des Transportes in der Reduktionsgasleitung vorzunehmen. Gemäß der JP-A-63241125 wird das Feinerz über eine Düse in den Reduktionsgasstrom gesaugt. Hierbei ergibt sich die Schwierigkeit, daß ein Kontakt zwischen dem Reduktionsgas und den einzelnen metalloxidhältigen Feinteilchen nicht in optimaler Weise realisiert werden kann.

Die in den Reduktionsgasstrom eintretenden Feinteilchen bilden einen kompakten Materialstrahl, selbst dann, wenn sie mittels eines Trägergases in den Reduktionsgasstrom eingeblasen werden. Erst nach Zurücklegen einer bestimmten Wegstrecke kommt es zum Auffächern des Materialstrahles, so daß für die Reduktion nur mehr eine geringere Wegstrecke und damit auch nur eine geringere Zeit zur Verfügung steht. Ein weiterer Nachteil ist darin zu sehen, daß der Materialstrahl infolge seiner Kompaktheit durch sein Eindringen in den das Reduktionsgas beherbergenden Raum Abnützungen durch Abtrieb an der diesen Raum begrenzenden Wandung hervorrufen kann.

Die Erfindung bezweckt die Vermeidung dieser Nachteile und Schwierigkeiten und stellt sich die Aufgabe, ein Verfahren der eingangs beschriebenen Art sowie eine Einrichtung zur Durchführung des Verfahrens zu schaffen, welche es ermöglichen, sofort nach Eintritt der metalloxidhältigen Feinteilchen in einen das Reduktionsgas beherbergenden Raum einen optimalen Kontakt der einzelnen Feinteilchen mit dem Reduktionsgas sicherzustellen, so daß jedes Feinteilchen von Reduktionsgas umgeben ist, u.zw. unmittelbar nach Austritt aus der die Feinteilchen zuführenden Leitung. Hierduch sollen die chemischen, physikalischen und thermischen Reaktionen, die alle von den Oberflächen der Feinteilchen ausgehend stattfinden, unmittelbar nach Einbringen der Feinteilchen in den das Reduktionsgas aufweisenden Raum ablaufen können, so daß die Zeit, in der die Feinteilchen sich in diesem Raum befinden, optimal genutzt werden kann. Hierdurch solles auch gelingen, die Anlage zur Direktreduktion der metalloxidhältigen Feinteilchen zu minimieren und das Reduktionsgas optimal auszunützen.

Diese Aufgabe wird erfindungsgemäß dadurch gelöst, daß ein zentraler, von den Feinteilchen und einem Trägergas gebildeter Materialstrahl in den Reduktionsgasstrom eingeleitet wird und in dem Reduktionsgasstrom mindestens ein von einem Sekundärgas gebildeter Gasstrahl gegen den Materialstrahl gerichtet wird, wobei der Gasstrahl den Materialstrahl zerstäubt und die Feinteilchen im Reduktionsgasstrom verteilt werden und der Gasstrahl dem Materialstrahl ein Drehmoment um die Achse des Materialstrahles versetzt und die Feinteilchen durch Zentrifugalkräfte aus dem Materialstrahl austreten und dieser aufgelöst wird.

Vorzugsweise versetzt der Gasstrahl dem Materialstrahl ein Drehmoment um die Achse des Materialstrahles und treten die Feinteilchen durch Zentrifugalkräfte aus dem Materialsstrahl aus und wird dieser aufgelöst.

Der Effekt des Ausnutzens der Zentrifugalkräfte kann noch verstärkt werden, indem der Gasstrahl dem Materialstrahl periodisch schwankend Drehmomente, vorzugsweise in unterschiedlichen Größen, versetzt. Hierdurch kann auch das optimale Drehmoment herausgefunden werden.

Zweckmäßig wird der Gasstrahl windschief und den Materialstrahl schneidend gegen den Materialstrahl gerichtet und dringt nur in die äußeren Bereiche des Materialstrahles ein, wobei vorteilhaft der Winkel α zwischen Gasstrahl und Materialstrahl periodisch veränderbar ist.

Vorteilhaft wird der Gasstrahl von Inertgas gebildet; es kann jedoch auch ein Reduktionsgas hierfür herangezogen werden.

Gemäß einer bevorzugten Ausführungsform strömt das Reduktionsgas am Materialstrahl vorbei, d.h. es wird der Materialstrahl in einen Reduktionsgasstrom eingeblasen, wobei zweckmäßig der Materialstrahl gegen die Strömungsrichtung des Reduktionsgases gerichtet ist, vorzugsweise mit einem Winkel zwischen 100 und 160°.

Vorzugsweise ist mindestens ein Gasstrahl gegen das Zentrum des Materialstrahles gerichtet und dringt in diesen ein.

Das erfindungsgemäße Verfahren ist mit besonderem Vorteil für ein Reduktionsverfahren einsetzbar, das dadurch gekennzeichnet ist, dass der Materialstrahl in einen Reduktionsgasstrom eingeleitet wird, der von einer Einschmelzvergasungszone ausgeht, in der durch Kohlevergasung ein CO- und H2-hältiges Reduktionsgas gebildet wird und teil- und/oder fertigreduzierte metallhältige Teilchen fertigreduziert bzw. eingeschmolzen werden, und welcher Reduktiongasstrom nach Einmünden des Materialstrahles einer Feststoffabscheidung unterworfen und sodann in einer Reduktionszone unter Reduzieren eines metalloxidhältigen Erzes umgesetzt wird, wobei die bei der Feststoffabscheidung abgeschiedenen Feinteilchen der Einschmelzvergasungszone über einen ein Agglomerieren der Feinteilchen bewirkenden Staubbrenner zugeführt werden.

Eine Einrichtung zur Durchführung des erfindungsgemäßen Verfahrens ist gekennzeichnet durch die Kombination folgender Merkmale:
- einen von einer Wand begrenzten Raum zur Aufnahme von Reduktionsgas, wobei der Raum für das Reduktionsgas von einem das Reduktionsgas leitenden Rohr gebildet ist,
- eine durch die Wand in den Raum mündende Einblasdüse,
- welche ein Feinteilchen und ein Trägergas leitendes Zentralrohr aufweist und
- an der Mündung des Zentralrohres mit mindestens einer Düse versehen ist, die an ein Gasleitung zur Zuführung eines Sekundärgases angeschlossen ist, wobei
- die Längsachse der Düse mit der Längsmittelachse des Zentralrohres in einer Normal projektion einen Winkel α einschließt, der vorzugsweise im Bereich zwischen 20 und 60° liegt,
- und die Längsachse der Düse zur Längsmittelachse des Zentralrohres windschief ausgerichtet ist, wobei der Materialstrahl des Zentralrohres durch die Düse zumindest teilweise mit einem Drehmoment um die Achse des Materialstrahles beaufschlagbar ist.

Gemäß einer bevorzugten Ausführungsform ist die Längsachse der Düse zur Längsmittelachse des Zentralrohres windschief ausgerichtet, wobei bei Projektion der Längsachse der Düse senkrecht auf eine Ebene, gelegt durch die Längsmittelachse des Zentralrohres und die Düsenmündung, zwischen der projizierten Längsachse der Düse und der Längsmittelachse des Zentralrohres ein Winkel α im Bereich zwischen 20 und 60° gebildet ist.

Hierbei ist zweckmäßig die Düse bei der Mündung des Zentralrohres beweglich angeordnet und kann mit ihrer Längsachse unterschiedliche Lagen, vorzugsweise unterschiedliche windschiefe Lagen, zur Längsmittelachse des Zentralrohres einnehmen.

Für die Zerstäubung des Materialstrahles kann es bei bestimmten örtlichen Voraussetzungen von Vorteil sein, wenn mehrere Düsen bei nur einer Umfangshälfte der Mündung des Zentralrohres angeordnet sind.

Für Materialströme großen Volumens sind zweckmäßig mehrere Düsen um den gesamten Umfang der Mündung des Zentralrohres etwa gleichmäßig verteilt angeordnet.

Eine bevorzugte Variante ist dadurch gekennzeichnet, daß der Raum für das Reduktionsgas von einem das Reduktionsgas leitenden Rohr gebildet ist, in das die Einblasdüse seitlich einmündet, wobei zweckmäßig die Längsmittelachse der Einblasdüse mit der Achse des das Reduktionsgas leitenden Rohres einen Winkel zwischen 100 und 160° einschließt.

Vorzugsweise schneidet die Längsachse mindestens einer Düse die Längsmittelachse des Zentralrohres.

Eine bevorzugte Anwendung der erfindungsgemäßen Einrichtung ist dadurch gekennzeichnet, daß die Einrichtung in ein Gasableitrohr, das von einem Einschmelzvergaser zum Einschmelzen und gegebenenfalls Fertigreduzieren von Metallerzen sowie zum Erzeugen eines CO- und H₂hältigen Reduktionsgases durch Kohlevergasung ausgeht, mündet und das Gasableitrohr in einen Feststoffabscheider, wie einen Zyklon, mündet, von dem die in dem Feststoffabscheider abgeschiedenen Feststoffe über eine Feststoff-Rückführleitung und einen Staubbrenner in den Einschmelzvergaser rückführbar sind.

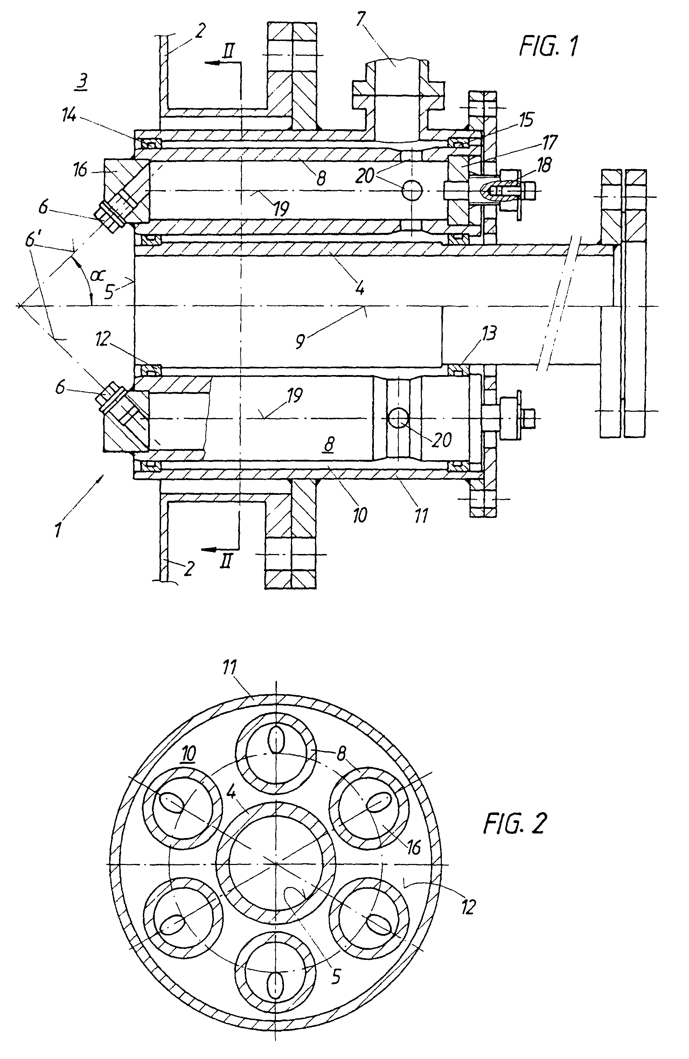

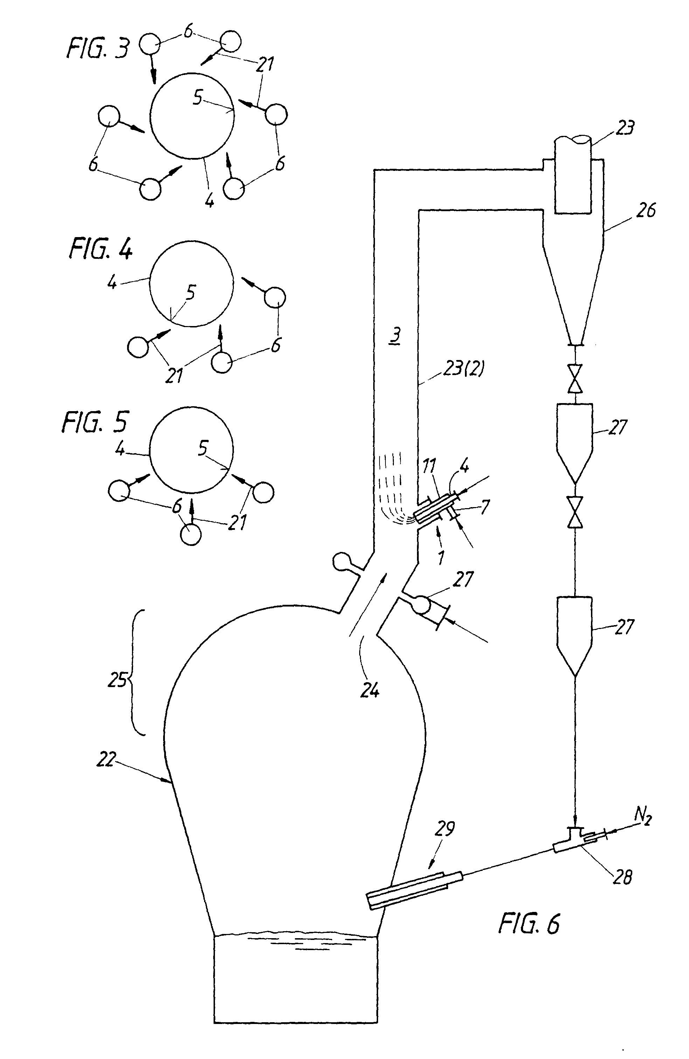

Die Erfindung ist nachstehend anhand mehrerer in der Zeichnung schematisch dargestellter Ausführungsbeispiele näher erläutert, wobei Fig. 1 einen Längsschnitt durch eine erfindungsgemäße Einrichtung und Fig. 2 einen Querschnitt hierzu, der entlang der Linie II-II der Fig. 1 geführt ist, zeigen. In den Fig. 3 bis 5 sind unterschiedliche Ausführungsformen der erfindungsgemäßen Einrichtung schematisch dargestellt. Fig. 6 zeigt die Anordnung einer erfindungsgemäßen Einrichtung in einer Anlage zur Direktreduktion von Feinerz.

Gemäß der in den Fig. 1 und 2 dargestellten Ausführungsform weist die Einrichtung zum Einblasen von metalloxidhältigen Feinteilchen in ein Reduktionsgas eine Einblasdüse 1 auf, die durch eine Wand 2 in einen Raum 3 mündet, der von Reduktionsgas durchströmt wird. Dieser Raum kann beispielsweise von einer Rohrleitung gebildet sein. Die Einblasdüse 1 weist ein Zentralrohr 4 auf, durch das die Feinteilchen mit Hilfe eines Trägergases zu dessen Mündung 5 geblasen werden, so daß sich an der Mündung ein von den Feinteilchen gebildeter Materialstrahl ausbildet.

An der Mündung 5 des Zentralrohres 4 sind das Zentralrohr 4 peripher umgebend mehrere Düsen 6 vorgesehen, die an eine Gasleitung 7 zur Zuführung eines Sekundärgases angeschlossen sind, u.zw. jeweils über Gasleitrohre 8. Diese Gasleitrohre 8 sind als parallel zur Längsmittelachse 9 des Zentralrohres 4 angeordnete Rohre ausgebildet, die in einem das Zentralrohr 4 peripher umgebenden Ringraum 10, in den die Gasleitung 7 einmündet, vorgesehen sind. Dieser Ringraum 10 ist außenseitig von einem Mantel 11 begrenzt, der stirnseitig an der Mündung 5 und an der gegenüberliegenden Stirnseite mittels Stirnflanschen 12, 13 geschlossen ist. Die Gasleitrohre 8 sind mittels gasdichter Lager 14, 15 gegenüber den Stirnflanschen 12, 13 drehbar.

Die einander gegenüberliegenden Enden der Gasleitrohre 8 sind mit Flanschen 16, 17 geschlossen. An den äußeren Flanschen 17 sind jeweils nach außen ragende Drehzapfen 18 angeordnet. An den Drehzapfen 18 sind nicht näher dargestellte Antriebe zum Drehen der Gasleitrohre um deren Längsachsen 19 vorgesehen. An den innenseitigen Flanschen 16 der Gasleitrohre 8 sind die Düsen 6 angeordnet, deren Achsen 6' mit der Längsmittelachse 9 des Zentralrohres einen Winkel α einschließen.

Die Gasversorgung der Gasleitrohre 8 und schließlich der Düsen 6 erfolgt über den Ringraum 10 und Öffnungen 20 der Gasleitrohre 8.

Durch Drehen der Gasleitrohre 8 um ihre Längsachsen 19 lassen sich die aus den Düsen 6 strömenden Gasstrahlen in ihrer Lage zum Materialstrahl variieren, u.zw. dahingehend, daß die Gasstrahlen von einer die Längsmittelachse 9 des Zentralrohres 4 schneidenden Position in eine zu dieser Längsmittelachse windschiefe Position bringbar sind. Mit Hilfe einer Einrichtung zum Drehen der Gasleitrohre 8 um deren Längsachsen 19 gelingt es, die Lage der Gasstrahlen zum Materialstrahl periodisch zu ändern. Der Winkel α, den die Gasstrahlen mit der Längsmittelachse 9 des Zentralrohres 4 einschließen, liegt vorzugsweise in einem Bereich zwischen 20 und 60°, wobei der Winkel α nicht für alle Gasstrahlen gleich groß sein muß.

Gemäß der in den Fig. 1 und 2 dargestellten Ausführungsform sind mehrere Düsen 6 um den gesamten Umfang der Mündung 5 des Zentralrohres 4 gleichmäßig verteilt angeordnet. Unter Umständen kann es jedoch genügen, wenn mehrere Düsen 6 an nur einer Umfangshälfte der Mündung 5 des Zentralrohres 4 vorgesehen sind, wie dies beispielsweise in den Fig. 4 und 5 dargestellt ist. Dies ist insbesondere dann der Fall, wenn das Reduktionsgas im Raum 3 eine gerichtete starke Strömung aufweist.

Anhand der Fig. 3, 4 und 5 ist ersichtlich, daß die Gasstrahlen, die durch Pfeile 21 symbolisiert sind, entweder genau gegen die Längsmittelachse 9 des Zentralrohres gerichtet sind (Fig. 5) oder windschief zu dieser vorgesehen sind (Fig. 3, 4), wobei jedoch der Materialstrahl selbst, der einen der Mündung 5 entsprechenden Mindestdurchmesser aufweist, noch von den Gasstrahlen getroffen wird. Die Gasstrahlen versetzen somit dem Materialstrahl eine Drehung um dessen Längsmittelachse 9, wodurch die Feinteilchen durch die Zentrifugalkräfte aus dem Materialstrahl austreten, sodaß dieser aufgelöst wird. Diese Funktion tritt zum Zerstäubereffekt, der durch die Gasstrahlen bewirkt wird, hinzu.

Die Gasstrahlen werden vorzugsweise von einem Inertgas gebildet. Als Trägergas kann ebenfalls Inertgas dienen. Anstelle der Düsen 6 könnte auch ein Ringspalt im Stirnflansch 12 vorgesehen sein, durch den ein fächerförmiger Gasstrahl gegen den Materialstrahl gerichtet wird. Fall die Lage dere Gasstrahlen zum Materialstrahl nicht verändert werden muß, kann auf die Gasleitrohre 8 verzichtet werden; die Düsen 6 können dann starr im Stirnflansch 12 eingesetzt sein.

Anhand der Fig. 6 ist nachfolgend die Anordnung der erfindungsgemäßen Einrichtung an einer ein Reduktionsgas aus einem Einschmelzvergaser 22, in dem in einer Einschmelzvergasungszone durch Kohlevergasung ein CO- und H₂-hältiges Reduktionsgas gebildet und reduziertes Eisenerz eingeschmolzen wird, zu einem nicht dargestellten Reduktionsgefäß führenden Reduktionsgas-Ableitung 23 beschrieben. Sowohl das Reduktionsgefäß, in dem Erz reduziert wird, als auch der Einschmelzvergaser können beispielsweise gestaltet sein, wie in der EP-A - 0 576 414 beschrieben. Das den Einschmelzvergaser 22 an einer Öffnung 24 im Dombereich 25 des Einschmelzvergasers 22 verlassende Reduktionsgas wird über die Reduktionsgas-Ableitung 23 einem Zyklon 26 zugeführt, in dem vom Reduktionsgas mitgerissene Partikel abgeschieden werden.

Im Anfangsbereich der Reduktionsgas-Ableitung 23 wird Kühlgas über eine Gaseinspeiseeinrichtung 27 in das Reduktionsgas eingespeist, um das Reduktionsgas auf die für die Reduktion im Reduktionsgefäß erforderliche Temperatur abzukühlen. Knapp danach ist die erfindungsgemäße Einblasdüse 1 angeordnet, wobei die Längsmittelachse 9 des Zentralrohres 4 der Strömungsrichtung des Reduktionsgases entgegengesetzt gerichtet ist und mit dieser einen Winkel zwischen 100 und 160° bildet.

Das in das Reduktionsgas eingeblasene und mit Hilfe des Sekundärgases bereits sofort nach dem Eintreten in die Reduktionsgas-Ableitung im Reduktionsgas feinverteilte Eisenerz wird innerhalb der Reduktionsgas-Ableitung 23 reduziert, zumindest teilreduziert, und im Zyklon 26 abgeschieden. Das zumindest teilweise reduzierte Eisenerz wird über die Staubbehälter 27 und einen vorzugsweise mittels Stickstoffgas betriebenen Injektor 28 einem Staubbrenner 29, der an einer Seitenwand des Einschmelzvergasers 22 angeordnet ist, zugeführt. Der Staubbrenner 29 bewirkt ein Agglomerieren der Feinteilchen und gegebenenfalls auch ein Fertigreduzieren.

Zusätzlich zum Eisenerz können über die erfindungsgemäße Einrichtung auch feinkörnige Hüttenwerksabfallstoffe oder Kreislaufstoffe in oxidierter und/oder metallischer Form sowie eventuell zusätzlich kohlenstoffhältige Stoffe eingebracht werden.

Mit Hilfe der erfindungsgemäßen Einrichtung gelingt es, 15 bis 30 % des Erzes durch Feinerz und/oder Hüttenstäube etc., die gegebenenfalls auch mit Schadstoffen vermischt sein können, zu ersetzen.

## Patentansprüche

1. Verfahren zum Einblasen von metalloxidhältigen Feinteilchen in einen in einer Reduktionsgasleitung geführten Reduktionsgasstrom, wobei ein zentraler, von den Feinteilchen und einem Trägergas gebildeter Materialstrahl in den Reduktionsgasstrom eingeleitet wird und in dem Reduktionsgasstrom mindestens ein von einem Sekundärgas gebildeter Gasstrahl gegen den Materialstrahl gerichtet wird, wobei der Gasstrahl den Materialstrahl zerstäubt und die Feinteilchen im Reduktionsgasstrom gleichmäßig verteilt werden und der Gasstrahl dem Materialstrahl ein Drehmoment um die Achse des Materialstrahles versetzt und die Feinteilchen durch Zentrifugalkräfte aus dem Materialstrahl austreten und dieser aufgelöst wird.

2. Verfahren nach Anspruch 1, **dadurch gekennzeichnet, daß** der Gasstrahl dem Materialstrahl periodisch schwankend Drehmomente, vorzugsweise in unterschiedlichen Größen, versetzt.

3. Verfahren nach Anspruch 1 oder 2, **dadurch gekennzeichnet, daß** der Gasstrahl windschief und den Materialstrahl schneidend gegen den Materialstrahl gerichtet wird und nur in die äußeren Bereiche des Materialstrahles eindringt.

4. Verfahren nach Anspruch 3, **dadurch gekennzeichnet, daß** der Winkel (α) zwischen Gasstrahl und Materialstrahl periodisch veränderbar ist.

5. Verfahren nach einem oder mehreren der Ansprüche 1 bis 4, **dadurch gekennzeichnet, daß** der Gasstrahl von Inertgas gebildet wird.

6. Verfahren nach einem oder mehreren der Ansprüche 1 bis 5, **dadurch gekennzeichnet, daß** das Reduktionsgas zum Materialstrahl strömt.

7. Verfahren nach Anspruch 6, **dadurch gekennzeichnet, daß** der Materialstrahl gegen die Strömungsrichtung des Reduktionsgases gerichtet ist, vorzugsweise mit einem Winkel zwischen 100 und 160°.

8. Verfahren nach einem oder mehreren der Ansprüche 1 bis 7, **dadurch gekennzeichnet, daß** mindestens ein Gasstrahl gegen das Zentrum des Materialstrahles gerichtet ist und in diesen eindringt.

9. Verfahren nach einem oder mehreren der Ansprüche 1 bis 8, **dadurch gekennzeichnet, daß** der Materialstrahl in einen Reduktionsgasstrom geleitet wird, der von einer Einschmelzvergasungszone ausgeht, in der durch Kohlevergasung ein CO- und H₂-hältiges Reduktionsgas gebildet wird und teil- und/oder fertigreduzierte metallhältige Teilchen fertigreduziert bzw. eingeschmolzen werden, und welcher Reduktionsgasstrom nach dem Einmünden des Materialstrahles einer Feststoffabscheidung unterworfen und sodann in einer Reduktionszone unter Reduzieren eines metalloxidhältigen Erzes umgesetzt wird, wobei die bei der Feststoffabscheidung abgeschiedenen Feinteilchen der Einschmelzvergasungszone über einen ein Agglomerieren der Feinteilchen bewirkenden Staubbrenner (29) zugeführt werden.

10. Einrichtung zur Durchführung des Verfahrens nach einem oder mehreren der Ansprüche 1 bis 9, bestehend aus der Kombination folgender Merkmale:
• einen von einer Wand (2,23) begrenzten Raum (3) zur Aufnahme von Reduktionsgas, wobei der Raum (3) für das Reduktionsgas von einem das Reduktionsgas leitenden Rohr (23) gebildet ist,
• eine durch die Wand (2,23) seitlich in den Raum (3) mündende Einblasdüse (1),
• welche ein Feinteilchen und ein Trägergas leitendes Zentralrohr (4) aufweist und
• an der Mündung (5) des Zentralrohres (4) mit mindestens einer Düse (6) versehen ist, die an eine Gasleitung (7) zur Zuführung eines Sekundärgases angeschlossen ist, wobei
• die Längsachse (6') der Düse (6) mit der Längsmittelachse (9) des Zentralrohres (4) in einer Normalprojektion einen Winkel (α) einschließt,
• und die Längsachse (6') der Düse (6) zur Längsmittelachse (9) des Zentralrohres (4) windschief ausgerichtet ist, wobei der Materialstrahl des Zentralrohres (4) durch die Düse (6) zumindest teilwelse mit einem Drehmoment um die Achse des Materialstrahles beaufschlagbar ist.

11. Einrichtung nach Anspruch 10, **dadurch gekennzeichnet, daß** der Winkel (α) im Bereich zwischen 20 und 60° liegt.

12. Einrichtung nach Anspruch 10 oder 11, **dadurch gekennzeichnet, daß** die Längsachse (6') der Düse (6) zur Längsmittelachse (9) des Zentralrohres (4) windschief ausgerichtet ist, wobei bei Projektion der Längsachse (6') der Düse (6) senkrecht auf eine Ebene, gelegt durch die Längsmittelachse (9) des Zentralrohres und die Düsenmündung, zwischen der projizierten Längsmittelachse (6') der Düse (6) und der Längsmittelachse (9) des Zentralrohres (4) ein Winkel (α) im Bereich zwischen 20 und 60° gebildet ist.

13. Einrichtung nach einem der Ansprüche 10 bis 12, **dadurch gekennzeichnet, daß** die Düse (6) bei der Mündung (5) des Zentralrohres (4) beweglich angeordnet ist und mit ihrer Längsachse (6') unterschiedliche Lagen, vorzugsweise unterschiedliche windschiefe Lagen, zur Längsmittelachse (9) des Zentralrohres (4) einnehmen kann.

14. Einrichtung nach einem oder mehreren der Anspruch 10 bis 13, **dadurch gekennzeichnet, daß** mehrere Düsen (6) bei nur einer Umfangshälfte der Mündung (5) des Zentralrohres (4) angeordnet sind. (Fig. 4,5)

15. Einrichtung nach einem oder mehreren der Ansprüche 10 bis 13, **dadurch gekennzeichnet, daß** mehrere Düsen (6) um den gesamten Umfang der Mündung (5) des Zentralrohres (4) etwa gleichmäßig verteilt angeordnet sind. (Fig. 3)

16. Einrichtung nach einem oder mehreren der Ansprüche 10 bis 15, **dadurch gekennzeichnet, daß** die Längsmittelachse (9) der Einblasdüse (1) mit der Achse des das Reduktionsgas leitenden Rohres (23) einen Winkel zwischen 100 und 160° einschließt.

17. Einrichtung nach einem oder mehreren der Ansprüche 10 bis 16, **dadurch gekennzeichnet, daß** die Längsachse (6') mindestens einer Düse (6) die Längsmittelachse (9). des Zentralrohres (4) schneidet.

18. Einrichtung nach einem oder mehreren der Ansprüche 11 bis 16, **dadurch gekennzeichnet, daß** die Einrichtung in ein Gasableitrohr (23), das von einem Einschmelzvergaser (22) zum Einschmelzen und gegebenenfalls Fertigreduzieren von Metallerzen sowie zum Erzeugen eines CO- und H₂-hältigen Reduktionsgases durch Kohlevergasung ausgeht, mündet und das Gasableitrohr (23) in einen Feststoffabscheider (26), wie einen Zyklon, mündet, von dem die in dem Feststoffabscheider (26) abgeschiedenen Feststoffe über eine Feststoff-Rückführleitung und einen Staubbrenner (29) in den Einschmelzvergaser (22) rückführbar sind.

## Claims

1. Method of blowing metal-oxide-containing fine particles into a reduction gas stream carried in a reduction gas line, a central material jet, formed by the fine particles and a carrier gas, being introduced into the reaction gas stream and at least one gas jet, formed by a secondary gas, in the reaction gas stream being directed against the material jet, the gas jet atomizing the material jet and the fine particles being uniformly distributed in the reaction gas stream, and the gas jet imparting a torsional moment to the material jet about the axis of the material jet, and the fine particles leaving the material jet due to centrifugal forces and the said material jet being broken up.

2. Method according to Claim 1, **characterized in that** the gas jet imparts periodically fluctuating torsional moments, preferably of differing magnitudes, to the material jet.

3. Method according to Claim 1 or 2, **characterized in that** the gas jet is directed against the material jet at a skewed angle and such that it intersects the material jet, and penetrates only into the outer regions of the material jet.

4. Method according to Claim 3, **characterized in that** the angle (α) between the gas jet and the material jet is periodically variable.

5. Method according to one or more of Claims 1 to 4, **characterized in that** the gas jet is formed by inert gas.

6. Method according to one or more of Claims 1 to 5, **characterized in that** the reduction gas flows to the material jet.

7. Method according to Claim 6, **characterized in that** the material jet is directed against the direction of flow of the reduction gas, preferably at an angle of between 100 and 160°.

8. Method according to one or more of Claims 1 to 7, **characterized in that** at least one gas jet is directed towards the centre of the material jet and penetrates into the latter.

9. Method according to one or more of Claims 1 to 8, **characterized in that** the material jet is directed into a reduction gas stream, which emerges from a fusion-gasifying zone, in which a CO- and H₂-containing reduction gas is formed by coal gasification and partly and/or fully reduced metal-containing particles are fully reduced or fused, respectively, and which reaction gas stream is subjected to a solids separation after the material jet has been introduced and is then converted in a reduction zone, involving reduction of a metal-oxide-containing ore, the fine particles separated during the solids separation being fed to the fusion-gasifying zone via a pulverized-fuel burner (29), which has the effect of agglomerating the fine particles.

10. Apparatus for carrying out the method according to one or more of Claims 1 to 9, comprising the combination of the following features:
• a space (3) for receiving reduction gas, bounded by a wall (2, 23), the space (3) for the reduction gas being formed by a tube (23) ducting the reaction gas,
• a blowing-in nozzle (1), opening laterally into the space (3) through the wall (2, 23),
• which has a central tube (4) ducting fine particles and a carrier gas and
• is provided at the mouth (5) of the central tube (4) with at least one nozzle (6), which is connected to a gas line (7) for the feeding in of a secondary gas,
• the longitudinal axis (6') of the nozzle (6) forming in normal projection an angle (α) with the longitudinal centre axis (9) of the central tube (4),
• and the longitudinal axis (6') of the nozzle (6) being directed at a skewed angle with respect to the longitudinal centre axis (9) of the central tube (4), the material jet of the central tube (4) being capable of being subjected by the nozzle (6) at least partly to a torsional moment about the axis of the material jet.

11. Apparatus according to Claim 10, **characterized in that** the angle (α) lies in the range between 20 and 60°.

12. Apparatus according to Claim 10 or 11, **characterized in that** the longitudinal axis (6') of the nozzle (6) is aligned at a skewed angle with respect to the longitudinal centre axis (9) of the central tube (4), an angle (α) in the range between 20 and 60° being formed when the longitudinal axis (6') of the nozzle (6) is projected perpendicularly on a plane, taken through the centre longitudinal axis (9) of the central tube and the nozzle mouth, between the projected longitudinal centre axis (6') of the nozzle (6) and the longitudinal centre axis (9) of the central tube (4).

13. Apparatus according to one of Claims 10 to 12, **characterized in that** the nozzle (6) is arranged movably at the mouth (5) of the central tube (4) and can assume different positions with its longitudinal axis (6'), preferably different skewed positions, with respect to the longitudinal centre axis (9) of the central tube (4).

14. Apparatus according to one or more of Claims 10 to 13, **characterized in that** a plurality of nozzles (6) are arranged around only one circumferential half of the mouth (5) of the central tube (4). (Figures 4, 5)

15. Apparatus according to one or more of Claims 10 to 13, **characterized in that** a plurality of nozzles (6) are arranged such that they are distributed approximately uniformly around the entire circumference of the mouth (5) of the central tube (4). (Figure 3)

16. Apparatus according to one or more of Claims 10 to 15, **characterized in that** the longitudinal centre axis (9) of the blowing-in nozzle (1) forms an angle of between 100 and 160° with the axis of the tube (23) ducting the reduction gas.

17. Apparatus according to one or more of Claims 10 to 16, **characterized in that** the longitudinal axis (6') of at least one nozzle (6) intersects the longitudinal centre axis (9) of the central tube (4).

18. Apparatus according to one or more of Claims 11 to 16, **characterized in that** the apparatus opens into a gas discharge tube (23), which emerges from a fusion gasifier (22) for the fusing and possibly final reduction of metal ores and for the generation of a CO- and H₂-containing reduction gas by coal gasification, and the gas discharge tube (23) opens out into a solids separator (26), such as a cyclone, from which the solids separated in the solids separator (26) can be returned via a solids return line and a pulverized-fuel burner (29) into the fusion gasifier (22).

## Revendications

1. Procédé d'insufflation de particules fines contenant des oxydes métalliques dans un courant de gaz de réduction acheminé dans un conduit de gaz de réduction, un jet de matériau central, formé de particules fines et d'un gaz vecteur, étant introduit dans le courant de gaz de réduction et au moins un jet de gaz formé d'un gaz secondaire étant dirigé dans le courant de gaz de réduction contre le jet de matériau, le jet de gaz pulvérisant le jet de matériau et les particules fines étant réparties de manière uniforme dans le courant de gaz de réduction et le jet de gaz imprimant au jet de matériau un moment de rotation autour de l'axe du jet de matériau et les particules fines s'échappant en raison des forces centrifuges du jet de matériau et ce dernier étant dissipé.

2. Procédé selon la revendication 1, **caractérisé en ce que** le jet de gaz imprime au jet de matériau de manière périodique des moments de rotation, de préférence de grandeurs différentes.

3. Procédé selon la revendication 1 ou 2, **caractérisé en ce que** le jet de gaz est dirigé de manière déversée et contre le jet de matériau de façon à couper ce dernier et **en ce qu'**il ne pénètre que dans les zones extérieures du jet de matériau.

4. Procédé selon la revendication 3, **caractérisé en ce que** l'angle (α) entre le jet de gaz et le jet de matériau est variable d'une manière périodique.

5. Procédé selon l'une quelconque ou plusieurs des revendications 1 à 4, **caractérisé en ce que** le jet de gaz est formé d'un gaz inerte.

6. Procédé selon l'une quelconque ou plusieurs des revendications 1 à 5, **caractérisé en ce que** le gaz de réduction afflue vers le jet de matériau.

7. Procédé selon la revendication 6, **caractérisé en ce que** le jet de matériau est dirigé contre le sens d'écoulement du gaz de réduction, de préférence en formant un angle compris entre 100 et 160E.

8. Procédé selon l'une quelconque ou plusieurs des revendications 1 à 7, **caractérisé en ce qu'**au moins un jet de gaz est dirigé contre le centre du jet de matériau et pénètre dans celui-ci.

9. Procédé selon l'une quelconque ou plusieurs des revendications 1 à 8, **caractérisé en ce que** le jet de matériau est introduit dans un courant de gaz de réduction, qui provient d'une zone de gazage à fusion, dans laquelle il se forme, par gazéification de charbon, un gaz de réduction contenant du CO et du H₂, et dans laquelle des particules contenant des métaux, partiellement et/ou complètement réduites sont complètement réduites ou fondues et **en ce que** le courant de gaz de réduction est soumis, après débouchement du jet de matériau, à une procédure de dépôt de substances solides et subit alors une décomposition dans une zone de réduction, sous réduction d'un minerai contenant des oxydes métalliques, les particules fines déposées lors du dépôt de substances solides étant acheminées à la zone de gazage à fusion par l'intermédiaire d'un brûleur à poussières (29) causant une agglomération des particules fines.

10. Dispositif en vue de l'exécution du procédé selon l'une quelconque ou plusieurs des revendications 1 à 9, se composant de la combinaison des caractéristiques suivantes :
• un espace (3) limité par une paroi (2, 23) en vue de la collecte du gaz de réduction, l'espace (3) pour le gaz de réduction étant formé d'un tube conduisant le gaz de réduction (23),
• une buse d'insufflation (1), débouchant latéralement à travers la paroi (2, 23) dans l'espace (3),
• qui présente un tube central (4) conduisant les particules fines et un gaz vecteur et
• qui est pourvu, à l'embouchure (5) du tube central (4), d'au moins une buse (6), qui est raccordée à un conduit de gaz (7) en vue de l'apport d'un gaz secondaire,
• l'axe longitudinal (6') de la buse (6) faisant un angle (∀) avec l'axe médian longitudinal (9) du tube central (4) dans une projection normale,
• et l'axe longitudinal (6') de la buse (6) étant orienté de manière déversée par rapport à l'axe médian longitudinal (9) du tube central (4), le jet de matériau du tube central (4) pouvant être alimenté au moins partiellement avec un moment de rotation autour de l'axe du jet de matériau par la buse (6).

11. Dispositif selon la revendication 10, **caractérisé en ce que** l'angle (∀) se situe dans le domaine compris entre 20 et 60E.

12. Dispositif selon la revendication 10 ou 11, **caractérisé en ce que** l'axe longitudinal (6') de la buse (6) est orienté de manière déversée par rapport à l'axe médian longitudinal (9) du tube central (4), un angle (∀) étant formé dans le domaine compris entre 20 et 60E en cas de projection de l'axe longitudinal (6') de la buse (6) perpendiculairement sur un plan, passant à travers l'axe médian longitudinal (9) du tube central et l'embouchure de la buse, entre l'axe médian longitudinal (6') projeté de la buse (6) et l'axe médian longitudinal (9) du tube central (4).

13. Dispositif selon l'une quelconque des revendications 10 à 12, **caractérisé en ce que** la buse (6) est disposée de manière mobile au voisinage de l'embouchure (5) du tube central (4) et peut prendre avec son axe longitudinal (6'), des positions différentes, de préférence des positions différentes déversées par rapport à l'axe médian longitudinal (9) du tube central (4).

14. Dispositif selon l'une quelconque ou plusieurs des revendications 10 à 13, **caractérisé en ce que** plusieurs buses (6) sont disposées (figures 4, 5) seulement sur une moitié de pourtour de l'embouchure (5) du tube central (4).

15. Dispositif selon l'une quelconque ou plusieurs des revendications 10 à 13, **caractérisé en ce que** plusieurs buses (6) sont disposées (figure 3) réparties à peu près de manière uniforme sur le pourtour tout entier de l'embouchure (5) du tube central (4) .

16. Dispositif selon l'une quelconque ou plusieurs des revendications 10 à 15, **caractérisé en ce que** l'axe médian longitudinal (9) de la buse d'insufflation (1) inclut un angle compris entre 100 et 160E avec l'axe du tube (23) conduisant le gaz de réduction.

17. Dispositif selon l'une quelconque ou plusieurs des revendications 10 à 16, **caractérisé en ce que** l'axe longitudinal (6') d'au moins une buse (6) coupe l'axe médian longitudinal (9) du tube central (4) .

18. Dispositif selon l'une quelconque ou plusieurs des revendications 11 à 16, **caractérisé en ce que** le dispositif débouche dans un tube de dérivation de gaz (23), qui part d'un gazéificateur de fusion (22) en vue de la fusion et, le cas échéant, de la réduction complète de minerais métalliques ainsi qu'en vue de la production d'un gaz de réduction contenant du CO et du H₂ par gazéification de charbon, et **en ce que** le tube de dérivation de gaz (23) débouche dans un séparateur de substances solides (26), tel un cyclone, duquel les substances solides déposées dans le séparateur de substances solides (26) peuvent être reconduites dans le gazéificateur de fusion (22) par l'intermédiaire d'un conduit de retour de substances solides et d'un brûleur à poussières (29).
